# EUROPEAN PATENT APPLICATION

(11) **EP 2 738 024 A1**
(43) Date of publication of application: **04.06.2014**
(21) Application number: 12195236.0
(22) Date of filing: 03.12.2012
(51) Int. Cl.: B60D 1/64

(54) **Coupling device for a towing hook**

(71) Applicant: Thule Towing Systems B.V., 7951 CX Staphorst (NL)
(72) Inventor: Borgonje, Christian, Staphorst (NL); Janssens, Gijs, Staphorst (NL); Stadig, Celine, Staphorst (NL)
(74) Representative: Valea AB

(57) **Abstract**

A coupling device (20) for connecting an electrical component (3) to a towing hook (11), the towing hook (11). The coupling device (20) is adapted to be detachably connected to the ball (16) of the towing hook (11) and to be detachably connected, directly or indirectly, a neck portion (14) of the towing hook (11).

## Description

### TECHNICAL FIELD

A coupling device for coupling an electrical component to a towing hook of a vehicle in a detachable manner. The coupling device can be adapted to couple a socket to the towing hook, the socket being adapted to be connected with a plug of the towable object.

### BACKGROUND OF THE INVENTION

A displaceable towing hook of a towing hook arrangement for a vehicle can be displaced between an operative position, in which a towable object can be coupled to the towing hook and towed, and an idle position, in which the towing hook is generally in a storage position, e.g. concealed behind a bumper of the vehicle. Towable objects can be trailers, caravans, bike carriers, or the like.

Some towable objects require external power; trailers for example may require external power to be permitted to be operated in traffic. The external power is generally used to power lights, such as brake lights or turning signals, and is generally transferred from the vehicle to the towable object via a power cord comprising a socket. The socket can be arranged on the vehicle; however, having the socket arranged on the vehicle itself can be troublesome as the position of the socket tends to be below the bumper of the vehicle, and thus in an inconvenient position with a limited amount of available space. Due to the low position of the socket, a user may require to kneel or bend in front of the socket, a maneuver which can be both difficult and tedious. It may further be difficult to find the appropriate position for the plug which is to be inserted into the socket as the visibility of the socket can be relatively low.

If the towing hook is displaceable between an operative position and an idle position, it is desirable that the socket also is safely displaced to an idle position. One solution which deals with this problem is disclosed in the US patent publication No US 2005/0046148A1, Reutlinger et al. in which a displaceable towing hook is disclosed which can be displaced between an operative position and an idle position. A socket for transferring power to the towable object is provided and taken along as the towing hook is displaced between the operative position to the concealed position. The socket is fixedly secured to the vehicle however and suffers from being ill placed and relatively inaccessible.

### SUMMARY OF THE INVENTION

It is an object of the present invention to solve, or to at least reduce, the drawbacks of the above mentioned prior art, or to at least provide for a useful alternative.

The objects are at least partly met by a coupling device for connecting an electrical component to a towing hook. The towing hook comprises a neck portion and a towing ball, the towing ball being adapted for connection with a towable object. The coupling device comprises at least one first connection site for connecting with the towing hook and a second site for connecting the electrical component to the coupling device. The coupling device is adapted to be detachably connected to the ball of the towing hook and to be detachably connected, directly or indirectly, to the neck portion of the towing hook.

The coupling device permits a user to detach the coupling device, and the electrical component such as socket, to connect a plug of the towable object. The coupling device can thereafter be connected to the neck of the towing hook. The coupling device is easy to use and does not require any substantial modification of the toing hook or a towing hook arrangement of a vehicle.

According to an aspect, the at least one first connection site is adapted to be detachably connected to said ball of said towing hook and to be detachably connected, directly or indirectly, to said neck portion of said towing hook. As an option, the coupling device can be arranged with a first and a second connection site, the first connection site being adapted for coupling with the towing ball of the towing hook, and the second connection site being adapted for being coupled with the neck of the towing hook.

According to an aspect, the coupling device comprises an adaptor adapted to be connected to the neck portion of the towing hook. The first connection site is adapted to be connected to the adaptor. By means of an adaptor, the coupling device can be used with substantially any towing hook. It is also possible to provide the adaptor with specific features, specifically adapted to interact with the electrical components of the coupling device, or to derive information about the electrical components or the coupling device itself. The adaptor can comprise a neck facing side and a first connection site facing side, wherein the first connection site facing side comprises a curved surface for imitate at least a portion of the towing ball of the towing hook.

According to an aspect, the electrical component is a socket for providing the towable object with at least power. The socket can be formed as an integral part of the coupling device, or be attached, fixedly or detachably, to the coupling device.

According to an aspect, the first connection site comprises a snap-on coupling, a biased coupling such as a spring biased coupling, or hook or loop material such as Velcro, or combinations thereof. The first connection site can comprise at least, preferable at least a first and a second grip arm, wherein at least one of the grip arms are deformable or biased to form a coupling mechanism.

According to an aspect, the coupling device can comprise at least one sensor. The sensor can be arranged to detect if the coupling device is coupled to the neck of the towing hook and/or to the towing ball of the towing hook. The sensor can be arranged in connection with the first connection site. It can thus be adapted to operate as a function of the first connection site e.g. to detect if the first connection site is in use and if in use, to detect at which position the first connection site is connected to.

The at least one sensor can communicate with an ECU arranged either on the vehicle which the towing hook is arranged on, or on the coupling device itself. The ECU can be a processing unit such as an on-board vehicle computer for example.

According to an aspect of the invention, the invention also relates to a towing hook arrangement comprising a towing hook. The towing hook comprising a neck portion and a towing ball adapted for connection with a towable object. The towing hook arrangement comprises a coupling device according to any one of the appended claims, or to any embodiment described herein. The towing hook is preferably displaceable between an operative position and an idle position.

### BRIEF DESCRIPTION OF THE DRAWINGS

Non-limiting embodiments of the present invention will be described in greater detail with reference to the accompanying figures in which;
figure 1 shows the rear of a vehicle comprising a towing hook arrangement with a towing hook which is displaceable between an operative position and an idle position;
figure 2 shows the towing hook and a coupling device coupled to the towing hook, the coupling device comprising a socket for carrying electrical components;
figure 3 shows the coupling device of figure 2 when being coupled to the neck of the towing hook and;
Figure 4 shows an adapted which can be used to couple the coupling device to the neck of the towing hook.

### DETAILED DESCRIPTION OF PREFERRED EMBODIMENTS

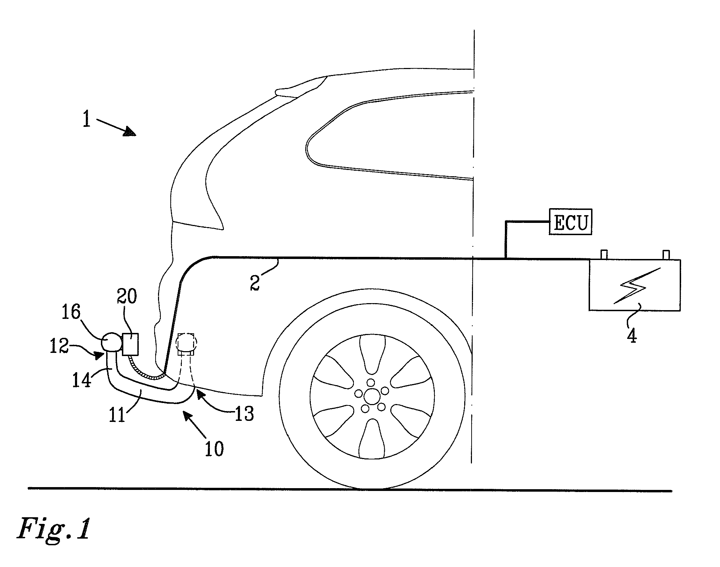

Figure 1 shows parts of a vehicle 1 arranged with a towing hook arrangement 10 comprising a towing hook 11. The towing hook 11 can be displaced between an operative position, in which a towable object can be towed, and an idle position, in which the towing hook 11 is in a storage position. The storage position of the towing hook 11 is illustrated in figure 1 with dashed lines. A storage position is generally substantially behind a bumper of the vehicle 1, although other positions are possible.

The towing hook 11 comprises a first and a second end 12, 13 and a neck 14 between the first and the second ends 12, 13. The first end 12 comprises a towing ball 16 adapted to be connected with a towable object such as a caravan, trailer, bike carrier or the like. The second end 13 of the towing hook 11 can be configured as described in the European patent no. EP 1,894,752 B1, which discloses a displaceable towing hook. In EP 1,894,752 B1 a towing hook projects from a housing which forms a socket coupling. The second end of the towing hook has the form of a ball, forming a ball and socket coupling together with the housing. The ball and socket coupling between the towing hook and the housing permits the towing hook to be positioned in an operative position for towing an object and in an idle position. The displacement and locking of the towing hook 11 can be performed manually by a user, semi-automatic in which a user displaces the towing hook 11 but the towing hook is electronically locked in the operative position or in the idle position, or fully automatic in which both the locking and the displacement is electronically controlled.

To transfer power to the towable object, the vehicle 1 comprises at least one cord 2 with a socket 3; the cord 2 is connected to a power source 4. Optionally, the cord 2 can carry wires which are connected to an electronic control unit ECU, such as a vehicle onboard computer, adapted to transfer, or to control, communication signals between electronic equipment (not shown) on the towable object and the vehicle 1. A coupling device 20 is adapted to attach the socket 3 to the towing hook 11 as will be described in greater detail below.

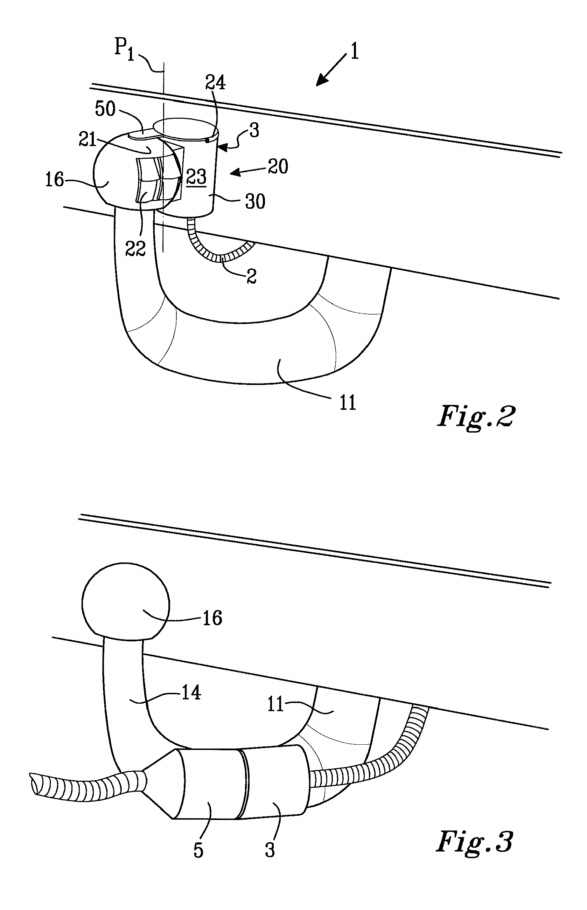

Figure 2 shows the coupling device 20 coupled, or mounted, to the towing ball 16 of the towing hook 11 of the vehicle 1. The coupling device 20 comprises a first connection site 21 adapted to be connected to the towing ball 16 of the towing hook 11. The first connection site 21 is specifically adapted to be coupled to the towing ball 16 of the towing hook 11, and hence adapted to be coupled to a substantially spherical surface. The first connection site 21 comprises at least one grip arm 22. In the shown embodiment two opposing grip arms 22 (only one shown), the grip arm(s) are pivotable about an axis P1. In case of pivotable grip arms, the grip arms are preferably biased by a spring or similar, to retain the coupling device 20 to the towing ball 16 of the towing hook 11.

The pivot arms can optionally be formed of a deformable, but form recovering material. Optionally at least one grip arm is formed by a deformable, but form recovering material. As the coupling device 20 is coupled to the towing ball 16, the deformable grip arms 22 deform slightly but strive towards retaining their original form, thus imposing a retaining force to the towing ball 16 of the towing hook 11. Combinations of deformable and biased pivot arms are also possible.

The coupling device 20 further comprises a second site 30 in this case formed by the socket 3. The socket 3 can be fastened by screws to the second site 30, or be connected via a snap-on coupling for example. It is possible that the socket 3 is simply retained by the second site 30 be a retraction force imparted to the socket 3 via the cord 2, for example if the cord 2 is a spiral cord. The second site 22 has a cylinder formed housing 23 which forms the socket 3. In this embodiment, the cylinder formed housing 23 forms the actual socket 3, hence the electrical components of the socket 3 can be installed directly in the cylinder formed housing 23 if desirable. The cylinder formed housing 23 can be provided with a pivotable lid 24, pivotally attached to the cylinder formed housing 23. The coupling device 20 can thus be configured to be connected to a socket 3, or the second site 22 can form a socket 3 for electrical components. In an embodiment, the second site of the coupling device comprises electrical components, such as conducting wires.

Figure 3 shows the coupling device 20 after being removed from the towing ball 16 of the towing hook 11 and coupled, or mounted, to the neck 14 of the towing hook 11. The first connection site 21 is thus also adapted to be coupled to the neck 14 of the towing hook 11. A plug 5 from the towable object is plugged into the socket 3 permitting power to be transferred from the vehicle to the towable object. As an option, the coupling device comprises a second connection site adapted to be couple the coupling device to the neck 14 of the towing hook 11.

The first connection site 21 can be configured to be coupled directly onto the neck 14 of the towing hook 11, or to be connected indirectly via an adapter, as will be described below. The adapter and/or the coupling device 20 can be arranged with a sensor 50 to detect the presence of the towing hook 11. For example, the sensor 50 can be adapted to detect whether the coupling device 20 is connected to the towing ball 16 of the towing hook 11, or to the neck 14 of the towing hook 11.

Other retaining mechanisms, or attachment arrangements, can be used to attach the coupling device 20 to the towing ball 16 and the neck 14 of the towing hook 11 and/or the adapter as described above. In an embodiment, at least one flexible wire element, at least one permanent magnet or electrical magnet, and/ or at least one buckle-, clasp- or hook member, can used to attach the coupling device 20 as described above.

The use of the coupling device 20 will be described hereafter. Initially, the towing hook 11, and the coupling device 20 arranged to the towing ball 16 of the towing hook 11, is substantially concealed behind the bumper of the vehicle 1, i.e. positioned in an idle position, as illustrated in figure 1 with dashed lines. When a user deploys the towing hook 11, i.e. displaces the towing hook 11 to the operative position in order to tow a towable object, the coupling device 20 is presented together with the towing ball 16 of the towing hook 11, as is illustrated in figures 1 and 2. As the coupling device 20 is arranged on the towing ball 16 of the towing hook 11, the user can easily reach the coupling device 20 and detach it from the towing ball 16 of the towing hook 11.

The user can thereafter optionally couple the towing hook 11 to the towable object.

When the coupling device 20 has been detached the user can connect the plug 5 of the towable object to the socket 3 of the coupling device 20. When the plug 5 of the towable object is connected to the socket 3, the coupling device 20 can be coupled to the neck 14 of the towing hook 11 as shown in figure 3. Hence, during coupling of the plug 5 and the socket 3, the user can advantageously use both his/hers hands for connecting the plug 5 and socket 3 as the coupling device 20 is completely released form the towing hook 11. The manoeuvrability of the coupling device 20 is only limited of the available length of the cord 2 in the shown embodiment.

If the coupling device 20 comprises a sensor 50, the sensor 50 can register that the coupling device 20 is connected to the neck 11 of the towing hook 11 and electronically block the towing hook 11 from being retracted to the idle position, if an automatic towing arrangement is used.

When a user wishes to retract the towing hook 11 to the idle position, the user disconnects the plug 5 of the towable object from the socket 3 of the coupling device 20. This can be done while the coupling device 20 is connected to the neck 14 of the towing hook 11, or advantageously after the coupling device 20 has been detached from the neck 14 of the towing hook 11. After removing the towable object from the towing hook 11, the coupling device 20 can be coupled to the towing ball 16 of the towing hook 11.

The sensor 50 can now detect that the coupling device 20 is connected to the towing ball 16 of the towing hook 11, and issue an OK signal, permitting the towing hook 11 to be retracted, or optionally a ready signal that the towing hook 11 is ready to be displaced to the idle position. This feature can be advantageous if the towing hook arrangement is a manual, semi-automatic, or automatic towing hook arrangement. A user can see from the ready signal that the coupling device is correctly coupled to the towing ball 16 of the towing hook 11 for example.

As the user commands, e.g. via an electric control, the towing hook 11 to be retracted the coupling device 20 has provided the ECU with an OK signal permitting retraction of the towing hook 11 to the idle position, or optionally the user with a ready signal, signalling to the user that the towing hook 11 can be retracted to the idle position.

The sensor 50 can be of an on/off switch type, which sends a signal to the ECU of the on/off status. The on/off status can be used by the ECU to determine whether the coupling device is coupled to the towing ball 16 of the towing hook 11 or on the neck 14 of the towing hook 11. If the ECU note that the coupling device 20 is positioned on the neck 14 of the towing hook 11 for example, the towing hook 11 is not permitted to be displaced to the idle position.

The sensor 50 can be adapted to cooperate with the adapter 40. For example; if the sensor 50 is arranged at the first connection site 21, upon connection with the adapter 40, the sensor signals to the ECU that the coupling device 20 has been coupled to the neck 14 of the towing hook 11 via the adaptor 40. As long as the sensor 50 detects that the coupling device 20 is connected to the neck 14 of the towing hook 11, the ECU prevents the towing hook 11 from being displaced to the idle position. The sensor 50 can transfer the signals to the vehicle, and the ECU wire-less, e.g. via blue tooth, Wi-fi, air plus or any other suitable communication protocol, or optionally via the cord 2.

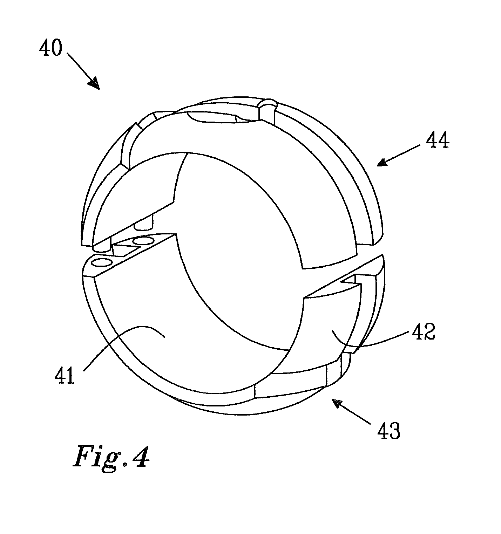

Figure 4 shows an embodiment of the adapter 40 in greater detail. The adapter 40, in the shown embodiment, is ring-formed and can extend around the neck 14 of the towing hook 11. The adapter 40 comprises a neck facing side 41 and a coupling device facing side 42. The coupling device facing side 42, which is adapted to be adjacent the first connection site 21 after assembly with the coupling device 20, has a curved surface to imitate a towing ball surface. The adapter 40 comprises a first and a second half 43, 44 permitting easy connection with substantially any neck of a towing hook. A flexible material such as a rubber sleeve, could be arranged between the neck 14 of the towing hook 11 should there be any tolerance or size differences there between which requires adjustment. The coupling device 20 can thus be steadily connected to the neck 14 of the towing hook 11.

Having an adapter 40 can also provide the benefit of adapting the sensor 50 to the coupling facing side 42 of the adaptor 40. A simple on/off sensor can for example be adapted to an irregularity, e.g. a cavity, of the coupling facing side 42 of the adaptor 40, which irregularity, e.g. cavity, is omitted on the towing ball 16 of the towing hook 11. As an alternative, the adapter 40 comprises a conducting material, or a conducting material layer, and thus be made to close a current circle on the socket 3, at which the ECU can detect that the coupling device 20 is coupled to the neck 14 of the towing hook 11. The coupling device 20 and the adapter 40 can thus add important safety aspects to the towing hook arrangement 10.

## Claims

1. A coupling device (20) for connecting an electrical component (3) to a towing hook (11), said towing hook (11) comprising a neck portion (14) and a towing ball (16), said towing ball (16) being adapted for connection with a towable object, said coupling device (20) comprising at least a first connection site (21) for connecting with said towing hook (11) and a second site (22) for connecting said electrical component (3) to said coupling device (20),
**characterized in that**
said coupling device (20) is adapted to be detachably connected to said ball (16) of said towing hook (11) and to be detachably connected, directly or indirectly, to said neck portion (14) of said towing hook (11).

2. The coupling device according to claim 1, wherein said at least first connection site (21) is adapted to be detachably connected to said ball (16) of said towing hook (11) and to be detachably connected, directly or indirectly, to said neck portion (14) of said towing hook (11).

3. The coupling device according to claim 1 or 2, wherein said coupling device (20) comprises an adaptor (40) adapted to be connected to said neck portion (14) of said towing hook (11), and in that said first connection site (21) is adapted to be connected to said adaptor (40).

4. The coupling device according to claim 3, wherein said adaptor (40) comprises a neck facing side (41) and a first connection site facing side (42), wherein said first connection site facing side (42) comprises a curved surface for simulating at least a portion of said towing ball (16) of said towing hook (11).

5. The coupling device according to any one of the preceding claims, wherein said electrical component (3) is a socket (3) for providing said towable object with at least power.

6. The coupling device according to any one of the preceding claims, wherein said first connection site (21) comprises a snap-on coupling, or a biased coupling.

7. The coupling device according to any one of the preceding claims, wherein said coupling device (20) comprises a sensor (50), preferably for detecting if the coupling device (20) is coupled to the neck (14) of the towing hook (11) and/or on the towing ball (16) of the towing hook (11).

8. The coupling device according to claim 7, wherein said sensor (50) is arranged in connection with said first connection site (21).

9. The coupling device according to any one of the claims 7-8, wherein said sensor () is configured to communicate with an ECU.

10. A towing hook arrangement (10) comprising a towing hook (11), said towing hook (11) comprising a neck portion (14) and a towing ball (16), said towing ball (16) being adapted for connection with a towable object, said towing hook arrangement (10) comprising a coupling device (20) according to any one of the preceding claims.

11. The towing hook arrangement (10) according to claim 10, wherein said towing hook (11) is displaceable between an operative position and an idle position.
